# EUROPEAN PATENT SPECIFICATION

(11) **EP 2 713 840 B1**
(45) Date of publication and mention of the grant of the patent: **06.05.2015**
(21) Application number: 12720585.4
(22) Date of filing: 30.03.2012
(51) Int. Cl.: A47J 47/18, B65D 21/08

(54) **REDUCIBLE BUCKET**
REDUZIERBARER EIMER
SEAU CONTRACTABLE

(30) Priority: 31.05.2011 IT PD20110181
(43) Date of publication of application: 09.04.2014
(73) Proprietor: Arcasa Srl, 35018 San Martino Di Lupari (IT)
(72) Inventor: SARTOR, Devis, 35018 San Martino Di Lupari (IT)
(74) Representative: Vinci, Marcello
(86) International application number: PCT/IB2012/051543
(87) International publication number: WO 2012/164411

(56) References cited:
- WO-A1-97/13446
- WO-A2-2006/098898
- US-A- 1 385 934
- US-A- 5 016 772

## Description

The present invention relates to buckets for liquids and particularly concerns a new extensible and reducible bucket.

There are well known buckets, used for liquid carriage, for small or fluid material. Buckets generally have truncated cone shape, with a circular or rectangular base, or with two opposite curved sides and two substantially linear sides. The buckets with rectangular base are more practical to store in the lumber-room or in the place of conservation of materials and products for cleaning. The buckets with rectangular base are commonly used with the current cleaning devices, said mop, constituted similarly to swabs that is comprising a handle at the end of which is fixed a staple consisting of strips of tissue. The staple of strips is fixed to the concave surface of a rigid support cover with a screw or pressure clutch on its convex surface for the fastening on the end of the handle. In the case of buckets to be used with mop or swabs, these ones include an accessory, to be applied on the upper edge of the bucket, in order to squeeze the staple of the mop or swab.

Well known are buckets with constant encumbrance, either full or empty.

WO 97/13446 relates to a foldable pail comprising a structure formed of two hinged rectangular frames and a container made of washable and flexible material.

US 1385934 relates to a telescopic bucket comprising a plurality of telescopic sections, foldable bars and springs so that the bucket can be collapsed or held in extended position.

The object of the present invention is a new reducible bucket.

The main task of the new bucket is the reduction of its encumbrance when not used.

Another scope of the new bucket is to maintain its open shape while left straight also when fulfilled with liquid and put down on a surface, for example on the floor.

Another purpose of the new bucket is to allow the application of an accessory on its upper edge for the squeezing of the staple of the mops or swabs. Another scope of the new bucket is to maintain a straight form and position while squeezing the staple of the mop on the squeezing accessory applied on its upper edge.

These and other scopes, direct and complementary, are achieved by the new reducible bucket comprising rigid parts and/or sides and flexible parts and/or surfaces.

In particular the new bucket comprises at least a first rigid part, a second rigid part and a third flexible intermediate part, connected to the two mentioned rigid parts. The first rigid part, realized in rigid and resistant plastic material, is generically box-shaped, devoid of a top and lateral side, that means it comprises at least two opposing vertical sides joined at the bottom by a bottom surface and a third vertical side joined to said two vertical sides and said bottom surface. The upper edge of each vertical side of said first rigid part is folded and/or enlarged to form a reinforcement of the edge of the bucket.

The vertical side of said first rigid part, orthogonal to the other two lateral sides and to the bottom lower surface, is preferably curved and in correspondence to its superior edge it presents a V-shaping in order to facilitate the pouring of the liquid contained in the bucket.

The second rigid part, realized in hard and resistant plastic material, is generically box-shaped devoid of one upper surface and one lateral side, that means it comprises at least two opposing vertical sides joined at the bottom by a bottom surface and a third vertical sides joined to said two vertical sides and to said bottom surface. The upper edge of each vertical side of said second rigid part is folded and/or thickened in order to constitute a reinforcement of the edge of the bucket, to form the attachment for the handle, to constitute a support for a possible wringing accessory of the mop or swab.

The third intermediate flexible part, realized in flexible and resistant plastic material, comprises two opposing vertical sides, joined at the bottom by a bottom surface.

Said third intermediate flexible part is placed between and joined to said first part and the second part so that each continuous edge of a vertical side, of the bottom surface and of the other vertical side is joined and fixed to the corresponding continuous edge of said first or second rigid part.

It is possible to plan that said first rigid part has minor dimensions than those of said second rigid part and that the superior edge of said first rigid part is preferably at the same level of the superior edge of said second rigid part.

The so constituted new bucket is used with the third flexible part unfolded, assuming the usual configuration of the known buckets.

When not used, the new bucket can be reduced by pushing said first rigid part towards and within said second rigid part. This movement implies that the third flexible part, combined with the other two rigid parts, totally or partially flexes, staying inside said rigid part and allowing the first rigid part to enter and stay inside the second rigid part.

In this reduced conformation the new bucket presents a horizontal dimension, subsequently said width and the vertical dimension, subsequently said height, identical to the open conformation, but the other horizontal dimension, subsequently said depth is minor to the depth of the open bucket and substantially equal to the depth of the second rigid part.

The eventual accessory for the squeezing of the staple of the mop or swab is applied on the superior edges of the second rigid part. When the first rigid part and the third flexible part are housed within the second rigid part, the lower part of the accessory for the squeezing that may be lower than the edge of the second rigid part does not obstruct and is not obstructed by the movement of interpenetration as the lateral sides of the first and third part go and stay aside and close to the vertical sides of said second rigid part and at the side of the lower part of the accessory for the squeezing.

It is possible to plan, in a second preferred example of realization, that the new bucket comprises two first rigid parts and two third flexible parts connected and combined together with the two opposite sides of said second rigid part.

In this second example of realization, said second rigid part only comprises the two opposed vertical sides joined at the bottom by the bottom surface in order to constitute a generic band with U-section.

The characteristics of the new bucket will be better clarified by the following description, with reference to the drawing boards, enclosed by way of nonlimiting example.

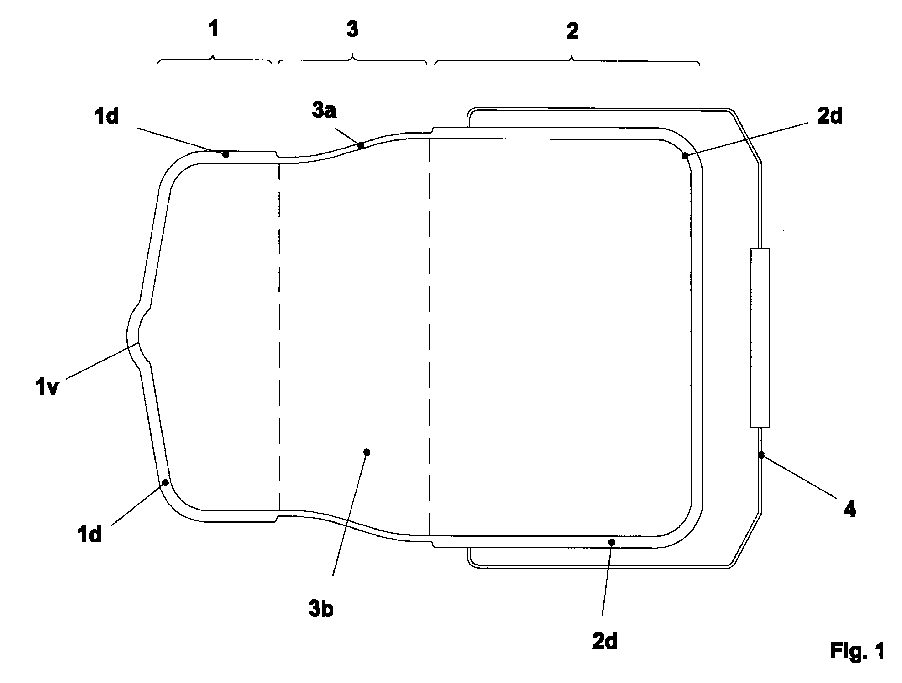

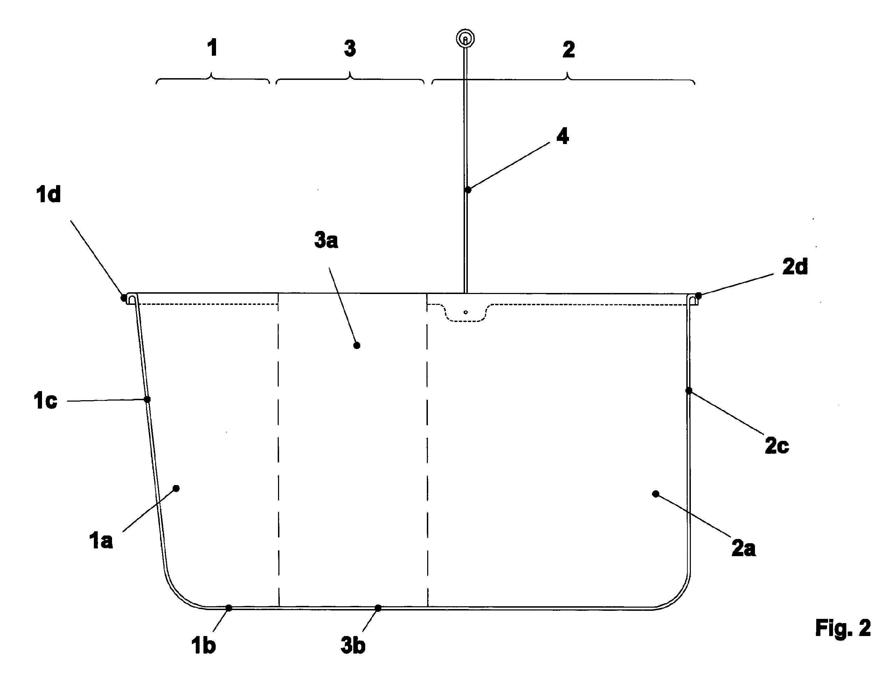

In Figure 1 and 2 are respectively represented a plan view and a vertical section of the new bucket.

The new bucket comprises a first rigid part (1), a second rigid part (2) and a third flexible part (3) intermediate and connected to said two rigid parts (1, 2).

The first rigid part (1), realized in rigid, resistant plastic material is generically box-shaped, devoid of the superior part and of a lateral side, that is it comprises at least two opposed vertical sides (1a) joined at the bottom by a bottom surface (1b) and a third vertical side (1c) joined to said vertical sides (1a) and to said bottom surface (1b). The superior edge (1d) of each vertical side (1a, 1c) of said first rigid part (1) is folded and/or thickened in order to constitute a reinforcement of the edge of the bucket.

The vertical side (1c) of said first rigid part (1), orthogonal to the other two lateral sides (1a) and to the lower bottom surface (1b), is preferably curved and presents a V-shaping (1v) in correspondence of its superior edge (1d) in order to facilitate the pouring of the liquid contained in the bucket.

The second rigid part (2), realized in rigid and resistant plastic material is generically box-shaped devoid of the superior surface and of a lateral side, that means it comprises at least two opposed vertical sides (2a) joined in the lower part by a bottom surface (2b) and a third vertical side (2c) joined to the two said vertical sides (2a) and to said bottom surface (2b). The superior edge (2b) of each vertical side (2a, 2c) of said second rigid part (2) is folded and/or thickened in order to constitute a reinforcement of the edge of the bucket, to form the attachment for the handle (4), to constitute a support for a possible wringing accessory (X) of the mop or swab.

The third intermediate flexible part (3), realized in flexible and resistant plastic material, comprises two opposed vertical sides (3a) joined in the lower part by a bottom surface (3b).

Said third intermediate flexible part (3) is interposed and combined to said first part (1) and second part (2) in a way that each continuous edge of a vertical side (3a), of the bottom surface (3b) and of the other vertical side (3a) is joined and fixed to the corresponding continuous edge of said first (1) or second (2) rigid part.

On the upper edge (2d) of the two vertical sides (2a) of the second rigid part (2) a handle (4) is hinged for the transport of the new bucket.

Figures 1 and 2 represent the new bucket in conformation of use, that is with the third flexible part (3) expanded, assuming the usual shape of well-known buckets. When not used, the new bucket can be reduced by pushing said first rigid part (1) towards and within said second rigid part (2). This movement implies that the third flexible part (3), combined with the other two rigid parts (1, 2), totally or partially flexes, staying inside said second rigid part (2) and allowing the first rigid part (1) to enter and stay inside the second rigid part (2), as illustrated in Figures 3 and 4 representing respectively a top view and a vertical section.

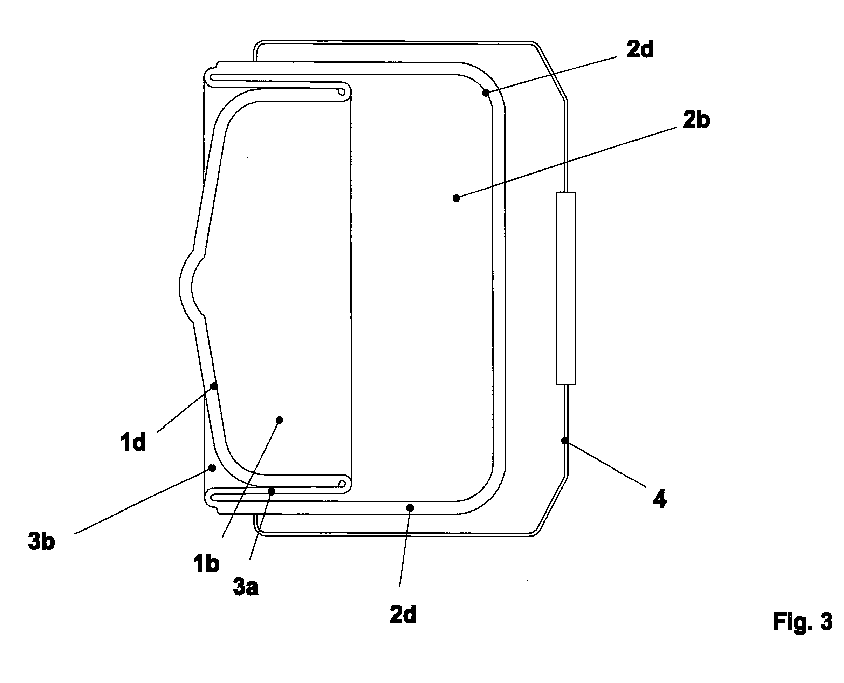

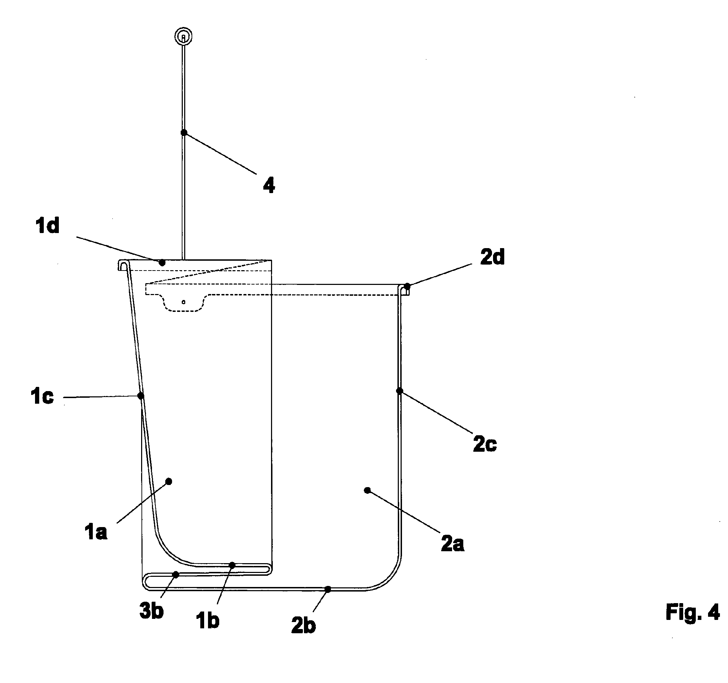

In the example represented in Figures 3 and 4, when the first part (1) is closed inside said second part (2), the third flexible part (3) is simply flexed in two points next to the first (1) and to the second (2) part, maintaining its central area substantially linear.

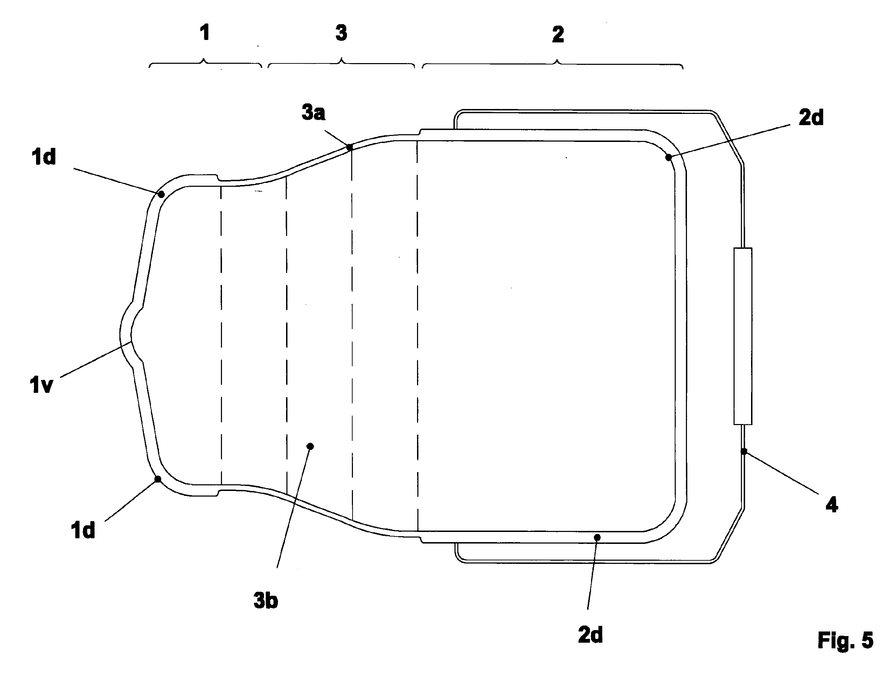

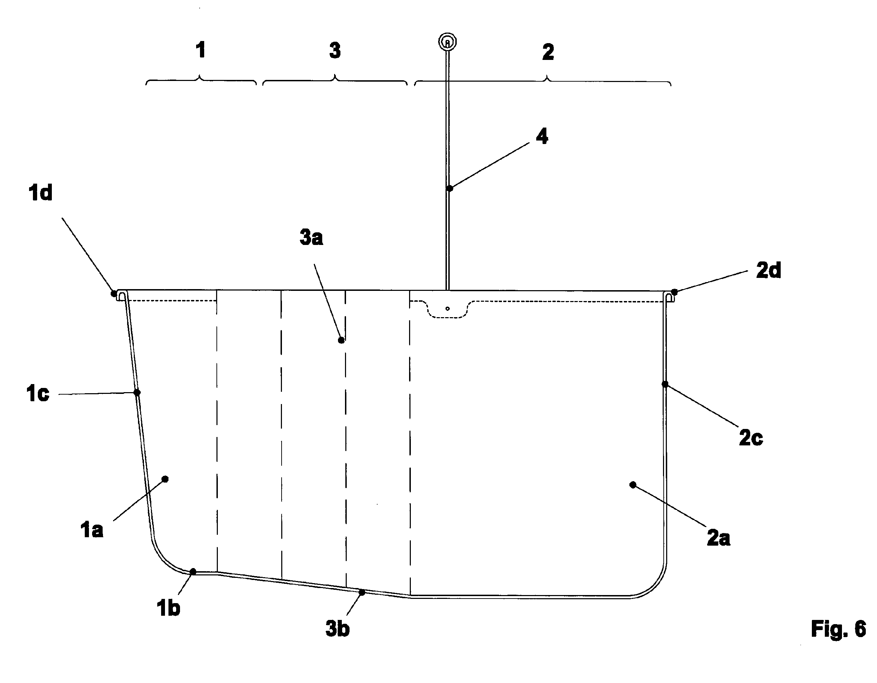

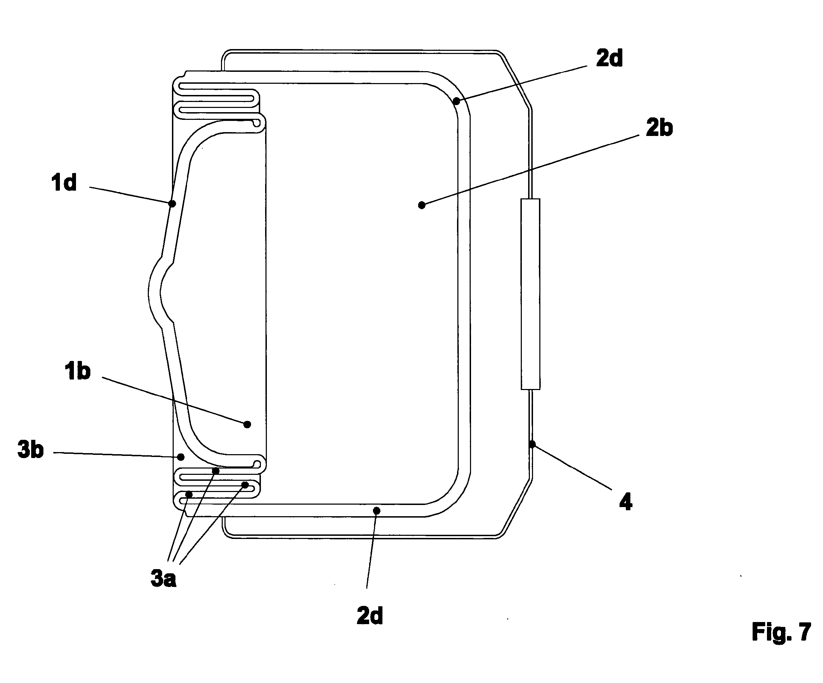

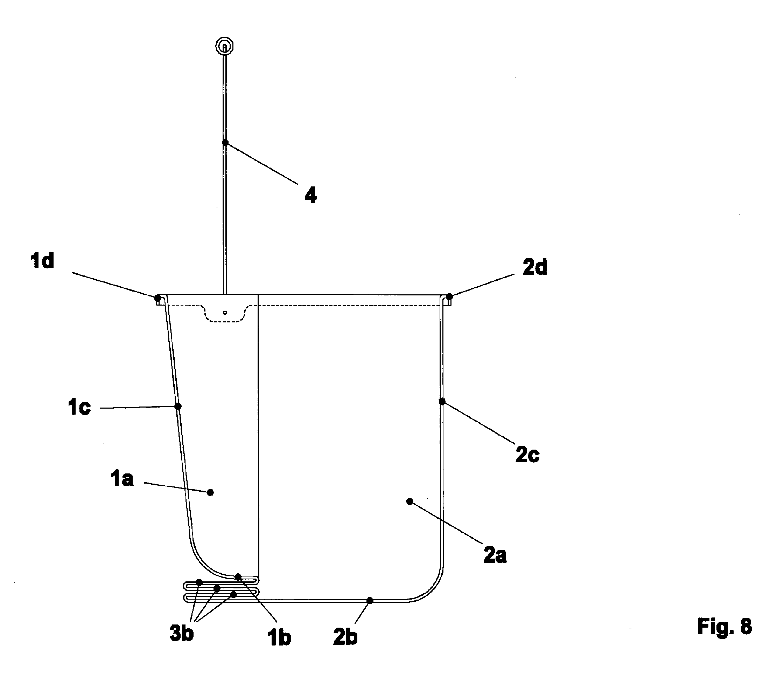

It is possible that the third flexible part (3) gets flexed into multiple segments or areas, as represented in Figures 5, 6, 7, 8.

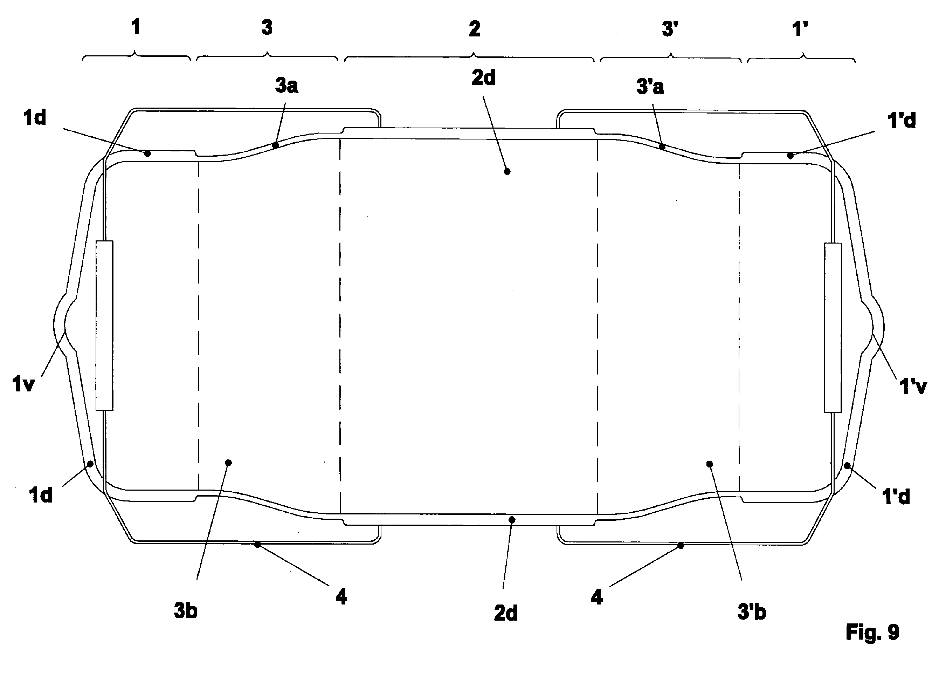

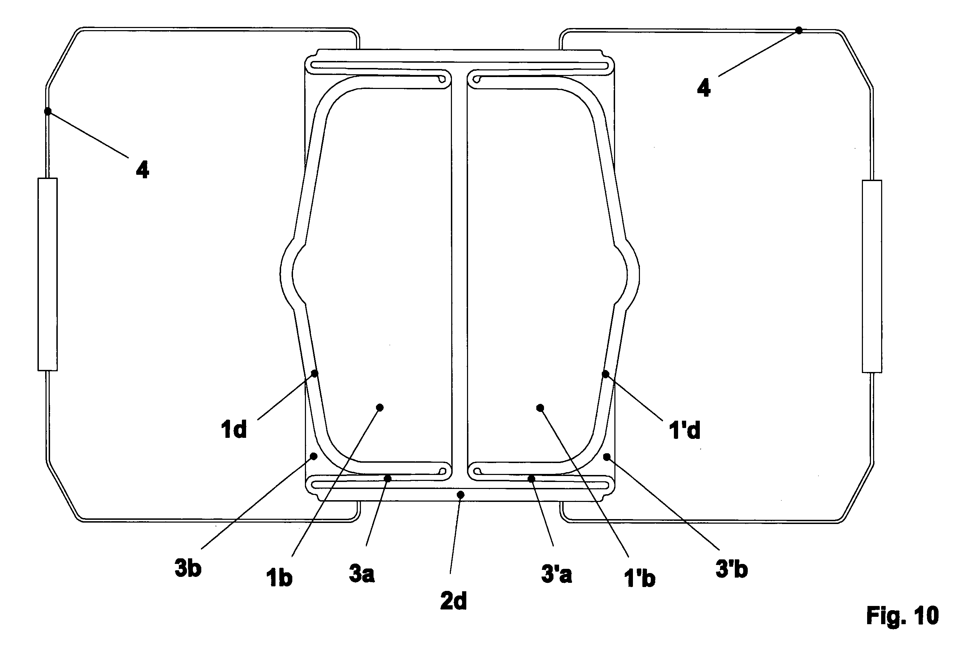

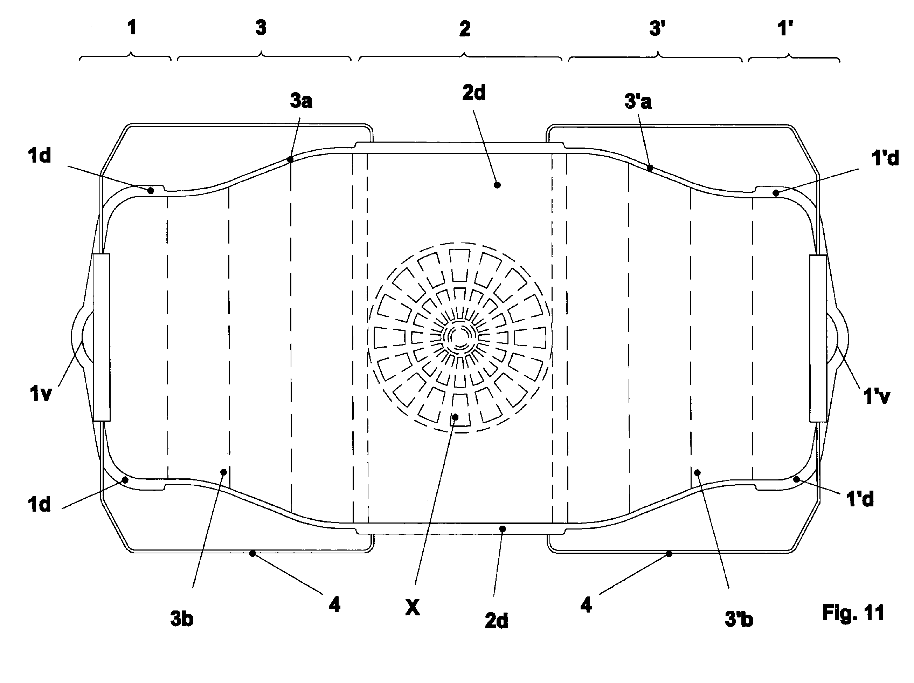

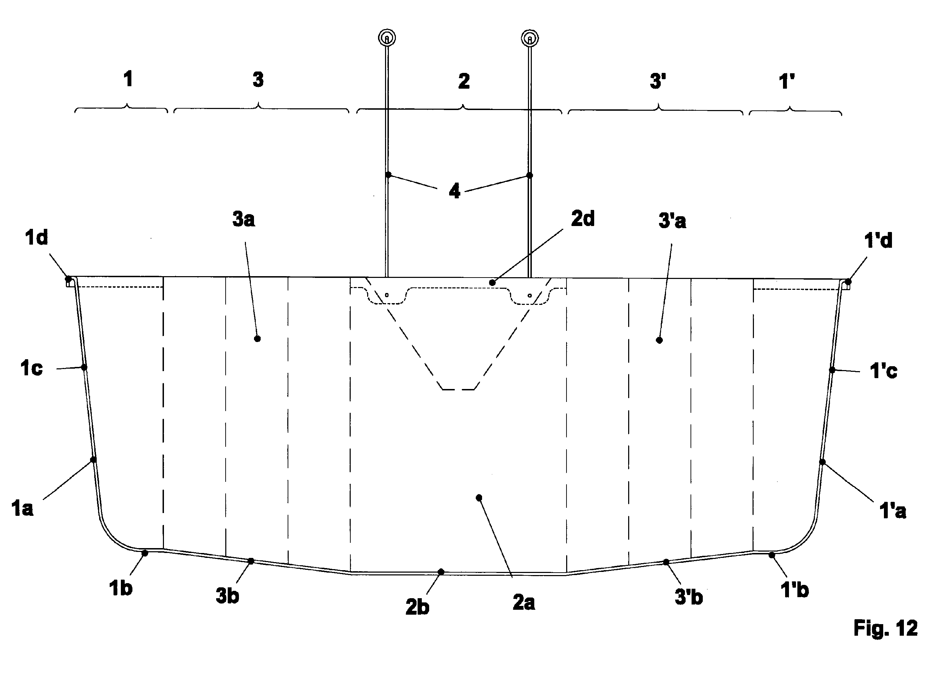

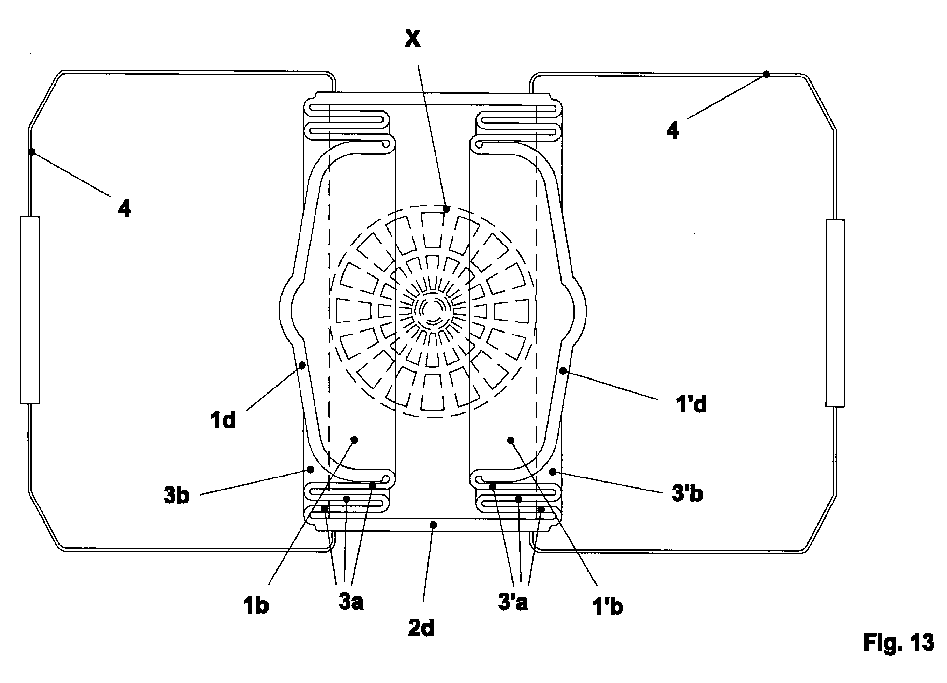

In Figures 9, 10, 11, 12, 13 is represented a second example of realization of the new bucket, having the first two rigid parts (1, 1') and two third flexible parts (3, 3') connected opposed to a second rigid central part (2).

As a consequence, with reference to the previous description and to the attached drawings, the following claims are expressed.

## Claims

1. Bucket **characterized in that** it comprises a first rigid part (1), a second rigid part (2) and a third flexible part (3) intermediate and connected to said two rigid parts (1, 2) and where said first rigid part (1) and said second rigid part (2), both comprises at least two opposite vertical sides (1a, 2a) joined at the bottom by a bottom surface (1b, 2b) and a third vertical side (1c, 2c) joined to said two vertical sides (1a, 2a) and to said bottom surface (1b, 2b), and where said third flexible intermediate part (3) comprises two opposed vertical sides (3a) joined at the bottom by a bottom surface (3b) joined to said first part (1) and said second part (2) so that each continuous edge of the vertical sides (3a) and of the bottom surface (3b) is joined and fixed to the corresponding continuous edge of said first (1) or second (2) rigid part, and where said third flexible intermediate part (3) is adapted to flex and allow the translation of said first rigid part (1) towards and within said second rigid part (2).

2. Bucket, according to claim 1, **characterized in that** said second rigid part (2) is devoid of the third intermediate vertical side (2c) and is connected and fixed with a further third flexible part (3') and a further first rigid part (1').

3. Bucket, according to claim 1 and 2, **characterized in that** the upper edge (1d, 2d) of the vertical sides (1a, 1c, 2a, 2c) of said first (1) and second (2) rigid parts is folded and/or thickened in order to constitute a reinforcement of the edge of the bucket and/or to form the attachment for a handle (4), and/or to constitute a support for a possible wringing accessory (X).

4. Bucket, according to claims 1, 2 **characterized in that** the vertical side (1c) of said first rigid part (1), orthogonal to the other two lateral sides (1a) and to the lower bottom surface (1b), is preferably curved and presents in correspondence to its upper edge (1d) a V-shaping (1v).

## Patentansprüche

1. Eimer, **dadurch gekennzeichnet, dass** er einen ersten, steifen Teil (1), einen zweiten, steifen Teil (2) und einen dritten mittleren, mit den beiden besagten steifen Teilen (1, 2) verbundenen, flexiblen Teil (3) umfasst und wobei der besagte erste, steife Teil (1) und der besagte zweite, steife Teil (2) jeweils wenigstens zwei einander entgegengesetzte, senkrechte Wände (1a, 2a) umfassen, die am Boden durch eine Bodenfläche (1b, 2b) verbunden sind, sowie eine dritte, senkrechte Seite (1c, 2c), die mit den besagten beiden senkrechten Seiten (1a, 2a) sowie mit der besagten Bodenfläche (1b, 2b) verbunden ist, und wobei der besagte dritte, flexible, mittlere Teil (3) zwei einander entgegengesetzte, senkrechte Seiten (3a) umfasst, die am Boden durch eine Bodenfläche (3b) verbunden ist, welche mit dem besagten ersten Teil (1) und mit dem besagten zweiten Teil (2) verbunden ist, so dass jede durchgehende Kante der senkrechten Seiten (3a) und der Bodenfläche (3b) an der entsprechenden, durchgehenden Kante des besagten ersten steifen Teils (1) oder des besagten zweiten, steifen Teils (2) verbunden und fixiert ist, und wobei der besagte dritte, flexible, mittlere Teil (3) geeignet ist, sich zu biegen und die Bewegung des besagten ersten, steifen Teils (1) zum und in den besagten zweiten, steifen Teil (2) zu erlauben.

2. Eimer gemäß Patentanspruch 1, **dadurch gekennzeichnet, dass** der besagte zweite, steife Teil (2) keine dritte, mittlere, senkrechte Seite (2c) hat und an einem weiteren dritten, flexiblen Teil (3') sowie an einem weiteren ersten, steifen Teil (1') verbunden und fixiert ist.

3. Eimer gemäß Patentanspruch 1 und 2, **dadurch gekennzeichnet, dass** die obere Kante (1d, 2d) der senkrechten Seiten (1a, 1c, 2a, 2c) des besagten ersten (1) und zweiten (2) steifen Teils umgeklappt und/oder verstärkt ist, um eine Verstärkung der Eimerkante zu bilden und/oder um den Anschluss für einen Griff (4) zu bilden, und/oder um eine Halterung für ein eventuelles Auswringzubehör (X) zu bilden.

4. Eimer gemäß Patentanspruch 1 und 2, **dadurch gekennzeichnet, dass** die senkrechte Seite (1c) des besagten ersten, steifen Teils (1), der orthogonal zu den anderen beiden, seitlichen Wänden (1a) und zur unteren Bodenfläche (1b) steht, vorzugsweise gekrümmt ist und in Entsprechung seiner oberen Kante (1d) eine V-Formung (1v) aufweist.

## Revendications

1. Seau **caractérisé en ce qu'**il comprend une première partie rigide (1), une deuxième partie rigide (2) et une troisième partie flexible (3) intermédiaire et reliée auxdites deux parties rigides (1, 2) et où ladite première partie rigide (1) et ladite deuxième partie rigide (2) comprennent chacune au moins parois opposées verticales (1a, 2a) unies sur le fond par une surface inférieure (1b, 2b) et une troisième paroi verticale (1c, 2c) unie auxdites deux parois verticales (1a, 2a) et à ladite surface inférieure (1b, 2b), et où ladite troisième partie flexible intermédiaire (3) comprend deux parois opposées verticales (3a) unies sur le fond par une surface inférieure (3b) unies à ladite première partie (1) et à ladite deuxième partie (2) de façon à ce que chaque bord continu des parois verticales (3a) et de la surface inférieure (3b) est uni et fixé au bord continu correspondant de ladite première partie rigide (1) ou de ladite deuxième partie rigide (2), et où ladite troisième partie intermédiaire (3) est adaptée à se fléchir et consentir la translation de ladite première partie rigide (1) vers et à l'intérieur de la dite deuxième partie rigide (2).

2. Seau selon la revendication 1, **caractérisé en ce que** ladite deuxième partie rigide (2) est dépourvue de ladite troisième partie verticale intermédiaire (2c) et est reliée et fixée avec une troisième partie flexible supplémentaire (3') et une première partie rigide supplémentaire (1').

3. Seau selon les revendications 1 et 2, **caractérisé en ce que** le bord supérieur (1d, 2d) des parois verticales (1a, 1c, 2a, 2c) de ladite première (1) et de ladite deuxième (2) parties rigides est plié et/ou épaissi de façon à constituer un renfort du bord du seau et/ou à former l'attache pour un manche (4), et/ou à constituer un support pour un accessoire de torsion (X).

4. Seau selon les revendications 1 et 2 **caractérisé en ce que** la paroi verticale (1c) de ladite première partie rigide (1), orthogonale auxdites deux autres parois latérales (1a) et à ladite surface inférieure de fond (1b), est préférablement courbée et présente une forme en V (1v) à hauteur de son bord supérieur (1d).
